# EUROPÄISCHE PATENTSCHRIFT

(11) **EP 2 604 359 B1**
(45) Veröffentlichungstag und Bekanntmachung des Hinweises auf die Patenterteilung: **14.06.2017**
(21) Anmeldenummer: 11193546.6
(22) Anmeldetag: 14.12.2011
(51) Int. Cl.: B21G 1/00, B21G 1/06, D04B 35/04

(54) **Zungennadel mit verbesserter Zungenlagerung und Verfahren zu ihrer Herstellung**
Latch needle with improved latch bearing and its method of manufacturing
Aiguille à coulisse dotée d'une aiguille à clapet améliorée et sa méthode de fabrication

(43) Veröffentlichungstag der Anmeldung: 19.06.2013
(73) Patentinhaber: Groz-Beckert KG, 72458 Albstadt (DE)
(72) Erfinder: Bruske, Johannes, Dr., 72458 Albstadt (DE); Stauss, Jochen, 72458 Albstadt (DE); Veeser, Jürgen, 72362 Nusplingen (DE); Jürgens, Eric, 72406 Bisingen (DE); Veeser, Werner, 72362 Nusplingen (DE)
(74) Vertreter: Rüger, Barthelt & Abel

(56) Entgegenhaltungen:
- DE-A1- 1 585 089
- US-A- 743 152
- US-A- 1 928 964
- US-A- 3 568 472
- US-A- 3 677 035

## Beschreibung

Die Erfindung betrifft eine Zungennadel, die in Textilmaschinen wie z.B. Rundstrickmaschinen, Flachstrickmaschinen oder Wirkmaschinen Anwendung finden kann.

Zungennadeln sind prinzipiell aus z.B. der
DE 36 00 621 C1 bekannt. Sie weisen einen Grundkörper mit einem Schaft und einem endseitig daran ausgebildeten Haken auf. In der Nähe des Hakens ist der Schaft mit einem Zungenschlitz versehen. Eine schwenkbar gelagerte Zunge ragt mit ihrem Zungenschaft in den Zungenschlitz hinein. An dem Ende des Zungenschafts ist ein Zungenloch vorgesehen, das von einem Achsstift durchgriffen ist. Der Zungenschlitz ist von zwei Seitenwänden begrenzt. In jeder Seitenwand ist eine Öffnung ausgebildet. Beide Öffnungen fluchten miteinander. Der Achsstift durchgreift das Zungenloch und ist mit seinen Enden in den Öffnungen gehalten. Die außen liegenden Ränder der beiden Öffnungen sind radial nach innen verformt, so dass der Achsstift bezüglich seiner Axialrichtung fest am Platz gehalten ist.

Bei dieser Lösung ist die Zunge mit ihrem Zungenloch auf dem unverdrehbar gehaltenen Achsstift schwenkbar gelagert. Hier konzentriert sich etwaiger Lagerverschleiß auf relativ kleine Flächen.

Aus der DE-PS-14407 ist eine Zungennadel bekannt, bei der die beiden in den Seitenwänden ausgebildeten Öffnungen kegelförmig ausgebildet sind. Der Achsstift ist an seinen Enden mit Nietköpfen versehen, die in den Kegelöffnungen sitzen. Der Achsstift stellt so eine starre Verbindung zwischen den Seitenwänden her.

Die DE-PS 917 243 offenbart Zungennadeln mit mitdrehendem Achsstift. Dazu ist ein Zungenloch vorgesehen, das einen geringeren Durchmesser aufweist als die Wandlöcher. Der Achsstift besteht aus Kunststoff und weist einen größeren Durchmesser als das Zungenloch, jedoch einen kleineren Durchmesser als die Wandlöcher auf. Wird er mit entsprechender Kraft in das Zungenloch eingezogen, sitzt er darin im Presssitz. Die aus der Zunge herausragenden Enden des Achsstifts sind in den Wandlöchern drehbar gelagert.

Die DE 1 906 892 B beruht hingegen auf einem Achsstift aus Stahl. Das Zungenloch weist wiederum einen geringeren Durchmesser als die Wandlöcher auf. Die beiden in den Seitenwänden ausgebildeten Öffnungen sind kegelförmig ausgebildet. Der Achsstift sitzt drehfest in dem Zungenloch und ist an seinen Enden mit konischen Köpfen versehen, die drehbar in den Kegelöffnungen sitzen. Der in das Zungenloch eingesetzte Achsstift ist axial gestaucht, so dass er im Presssitz in dem Zungenloch sitzt. Die aus dem Zungenloch herausschauenden Enden bilden kegelstumpfförmige Nietköpfe, die in den Wandlöchern drehbar gelagert sind. Der Achsstift stellt auch hier eine starre Verbindung zwischen den Seitenwänden her.

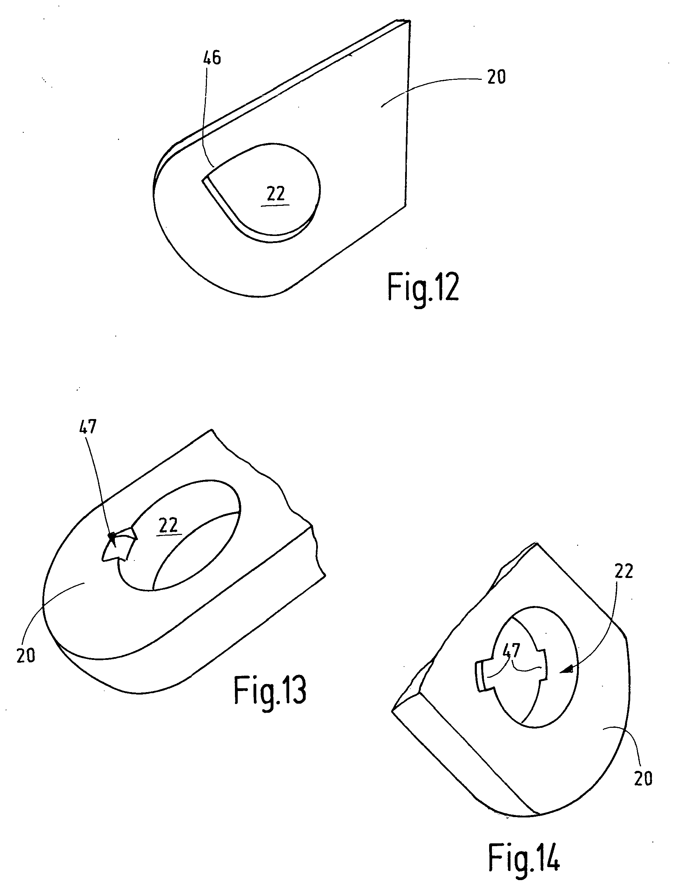

Während die vorstehenden Druckschriften grundsätzlich von Achsstiften ausgehen, deren beide Enden im Wesentlichen gleich ausgebildet sind, sieht die EP 2 224 048 A1 in zumindest einer Ausführungsform einen Achsstift vor, der auf beiden Seiten des Backenlochs einen größeren Durchmesser aufweist als in dem Zungenloch (siehe dort Fig. 13). Der Achsstift erhält seine Form durch einseitiges Stauchen. Damit ist der Achsstift unsymmetrisch ausgebildet.

Aus der US 743,152 ist eine Zungennadel mit einer schwenkbar gelagerten Zunge bekannt. Die Nadel weist einen Nadelgrundkörper mit einem Schaft auf, in dem ein von zwei Seitenwänden begrenzter Schlitz ausgebildet ist. In den Schlitzwänden sind zwei miteinander fluchtende durchgehende Öffnungen mit übereinstimmendem Querschnitt ausgebildet. Die Zunge weist einen Zungenschaft mit einem durchgehenden Zungenloch auf, dessen Querschnitt mindestens so groß ist, wie der Querschnitt der Öffnungen. Als Zungenlagerung dient ein Lagerstift, der sich durch das Zungenloch erstreckt und innerhalb beider Öffnungen durch plastische Deformation erzeugte Köpfe von übereinstimmender Form aufweist. Bei der stauchenden plastischen Deformation wird der Durchmesser des Stifts auch in dem Bereich des Zungenlochs erhöht, um eine spielarme Lagerung der Zunge auf dem Stift zu erreichen.

Die vorgestellten bekannten Zungenlagerungen können fertigungstechnische Probleme, Standzeitprobleme, Präzisionsprobleme oder sonstige Nachteile aufweisen.

Es ist Aufgabe der Erfindung, eine verbesserte Zungenlagerung zu schaffen.

Diese Aufgabe wird mit dem Verfahren nach Anspruch 1 sowie der Zungennadel nach Anspruch 6 gelöst:
Mit dem erfindungsgemäßen Verfahren wird ein Nadelgrundkörper mit einem Schaft bereitgestellt, der einen von zwei Seitenwänden begrenzten Schlitz aufweist. Der Schlitz kann in dem Schaft mittig oder in Sonderfällen auch außermittig angeordnet sein. Die Seitenwände sind somit vorzugsweise gleich dick. Sie können jedoch auch unterschiedlich dick ausgebildet sein. Die Seitenwände könnten an ihrer Innenseite glatt oder auch gestuft ausgebildet sein. Somit kann der Schlitz parallelflankig begrenzt sein und eine einheitliche Dicke aufweisen oder auch ein Schlitz sein, der lokal unterschiedliche Breiten aufweist. Zum Beispiel kann der Schlitz an der Nadelbrust enger und an dem Nadelrücken weiter ausgebildet sein. Andere Konfigurationen sind möglich.

In den Seitenwänden sind an einander gegenüber liegenden Stellen Lageröffnungen ausgebildet. Diese weisen einen übereinstimmenden zylindrischen Querschnitt auf, d.h. sie verjüngen sich weder nach innen zu dem Schlitz hin noch nach außen hin zu den Nadelflanken. Die Lageröffnungen können an dem Schlitz und/oder an der Außenflanke mit kleinen trichterartigen Erweiterungen vorgesehen sein. Zwischen diesen angefasten Bereichen weist die Lageröffnung jedoch oben genannte Form auf.

Die Zunge dient zum Öffnen und Schließen des Hakens. Sie wird dazu an dem Nadelgrundkörper schwenkbar gelagert. Das mit dem Haken in und außer Eingriff überführbare Ende der Zunge kann als Löffel oder auch als schmale Nase ausgebildet sein, die in eine Ausnehmung des Hakens trifft. Die Form der Zunge kann zweckentsprechend variiert oder festgelegt sein.

Die Zunge weist einen Zungenschaft auf, der vorzugsweise als schmaler mit geringem Spiel in den Schlitz passender Steg ausgebildet ist. Vorzugsweise weist er an den den Schlitzwänden zugewandten Seiten ebene Flächen auf, die zueinander parallel ausgerichtet sind. Diese Flächen können jedoch auch mit Ausnehmungen, Stufen oder dergleichen versehen sein.

Der Zungenschaft weist ein Zungeloch auf. Dieses ist vorzugsweise zylindrisch oder auch von der Zylinderform abweichend, z.B. polygonal ausgebildet. Vorzugsweise weist es einen konstanten Querschnitt auf. Zur Montageerleichterung kann das Zungenloch an seinen beiden Rändern mit Einführschrägen, zum Beispiel in Gestalt kleiner Fasen, versehen sein. Das Zungenloch hat einen geringeren Querschnitt als die Lageröffnungen in den Schlitzwänden. Bei der fertigen Nadel ist das Zungenloch konzentrisch oder, falls gewünscht auch exzentrisch zu den Lagerköpfen.

Zur Herstellung der Zungenlagerung wird zunächst die Zunge in dem Schlitz positioniert und dann ein zylindrischer Stift in das Zungenloch eingefügt. Der Stift passt so weit in das Zungenloch, dass er mit geringem Spiel oder auch ohne nennenswertes Spiel in dem Zungenloch sitzt. Vorzugsweise ist die Passung so gewählt, dass der Stift in dem Zungenloch reibschlüssig gehalten ist. In einem nachfolgenden Arbeitsschritt wird der Stift axial gestaucht, so dass sich an seinen beiden Enden vorzugsweise zueinander spiegelsymmetrische Lagerköpfe ausbilden. Diese Lagerköpfe sind in den Lageröffnungen positioniert. Vorzugsweise schließen beide Lagerköpfe in einer geraden Ringschulter an dem mittleren Zapfenabschnitt an, der in dem Zungenloch sitzt. Auf diese Weise wird die an dem Umfang jedes Lagerkopfs zur Verfügung stehende Lagerfläche maximiert.

Die Länge des zylindrischen Stifts übersteigt vor dem Stauchvorgang vorzugsweise die Dicke des Nadelgrundkörpers, so dass er nach dem Einführen in das Zungenloch beidseits aus den Lageröffnungen heraussteht. Er wird vor dem Stauchen vorzugsweise mittig positioniert so dass er über beide Seitenflächen der Nadel gleich weit übersteht. Auf diese Weise entstehen beim Stauchvorgang symmetrisch ausgebildete Lagerköpfe an dem Stift.

Es ist möglich, den Stift in einem Vorgang oder auch in mehreren Schritten zu stauchen. Beispielsweise können dazu stirnseitig glatte oder auch gestufte Stempel eingesetzt werden. Zum Beispiel kann der Stift in einem ersten Stauchvorgang mit stirnseitig glatten Stempeln axial gestaucht werden, so dass sich zunächst näherungsweise zylindrische Lagerköpfe bilden. In einem zweiten Nachdrückvorgang kann mit einem Stempel gearbeitet werden, der einen geringeren Durchmesser aufweist, so dass in die beiden Lagerköpfe jeweils Vertiefungen eingeprägt werden. Dadurch lässt sich die Form der Lagerköpfe optimieren. Außerdem lässt sich dadurch der mittlere in dem Zungenloch sitzende Stiftabschnitt weiter expandieren, so dass ein sicherer, drehfester Sitz des Stifts in dem Zungenloch entsteht. Vorzugsweise weisen die in die Außenseiten der Lagerköpfe eingebrachten Vertiefungen dabei einen Durchmesser auf, der geringer ist als der Durchmesser des in dem Zungenloch sitzenden Abschnitts des Stifts.

Ist das Zungenloch rund, kann das genannte Verfahren zum radialen Expandieren des mittleren Stiftabschnitts und folglich zu einem festen Presssitz des Stifts in dem Zungenloch führen.

Das Zungenloch kann jedoch auch unrund oder als Zylinderöffnung mit zusätzlichem Formmerkmalen, bspw. randseitigen kerben ausgebildet sein. Der Stauchvorgang führt bei geeigneter Verfahrensführung nicht nur zum Ausformen der Lagerköpfe, sondern auch zur Stauchung des mittleren Stiftabschnitts und somit zur Ausfüllung der zusätzlichen Formmerkmale mit Material des Stifts. Auch polygonale Zungenlöcher können so durch den axial gestauchten und somit radial expandierenden mittleren Stiftabschnitt mit Material des Stifts gefüllt werden, der sich an die Form des Zungenlochs anpasst und somit unrund wird. Die radiale Expansion führt zu einer formschlüssigen, drehfesten Kopplung zwischen dem Stift und der Zunge. Auf diese Weise kann ein Formschluss zwischen dem Stift und der Zunge erreicht werden.

Die erfindungsgemäße Zungennadel weist einen Lagerstift auf, der drehfest in dem Zungenloch der Zunge sitzt. Zu beiden Seiten des Zungenschafts weist der Stift in einem Stauchprozess erzeugte Köpfe auf, die einen zylindrischen Außenumfang aufweisen. Diese Köpfe dienen der Lagerung der Zunge in den Lageröffnungen. Durch die zylindrische Form der Lagerköpfe können sich diese in den Lageröffnungen axial verlagern. Dadurch kann die Zungennadel im Betrieb elastische Verformungen erfahren, bei denen die beiden Schlitzwände ihren Abstand ändern. Zum Beispiel können die Schlitzwände sich flexibel seitlich verformen. Der zur Zungenlagerung dienende Stift hemmt eine solche Verformung und Bewegung nicht. Auch ist die Gefahr des Flatterns der Zunge infolge dynamischer Aufweitungen des Schlitzes gebannt.

Durch die Erzeugung der beiden Lagerköpfe jeweils im Stauchverfahren und die dadurch entstehende Symmetrie zwischen den Lagerköpfen betrifft etwaiger Lagerverschleiß beide Lagerköpfe gleichmäßig. Durch den fortschreitenden Verschleiß kann somit keine Schrägstellung der Zunge oder sonstige Ungenauigkeit eintreten.

Im Gegensatz zu Zungenlagerungen, bei denen der Zapfen aus den Schlitzwänden geformt wird, kann die Dicke der Seitenwände im Verhältnis zur Nadelschlitzweite abweichend von der sonst üblicherweise angewandten 1/3-Regel festgelegt werden. Beispielsweise können bei der erfindungsgemäßen Nadel besonders verschleißfeste Zungen oder auch gewichtsoptimierte dünne Zungen zur Anwendung kommen. Die Dicke des Zungenschafts kann somit die Dicke einer Seitenwand beträchtlich übertreffen oder im Gegensatz dazu auch wesentlich dünner ausgebildet sein als die Dicke der Seitenwand. Bei der Umformung des Stifts zur Zungenachse mit zwei Lagerköpfen lässt sich anhand der ursprünglichen Länge des Stifts sowie der Form und des Hubs der Umformwerkzeuge und sonstiger Verfahrensparameter festlegen, wie viel Spiel die Zunge und ihre Zungenlagerung im Nadelgrundkörper hat. Außerdem sind außermittige Anordnungen möglich.

Die Lagerköpfe können an dem Stift konzentrisch ausgebildet sein. Es ist aber auch möglich sie exzentrisch anzuordnen. Dadurch kann die horizontale und/oder die vertikale Position der Zunge in Abhängigkeit ihrer Schwenkposition beeinflusst werden, ohne dass dazu die Position der Lageröffnungen in den Seitenwänden geändert werden müsste. Diese eröffnet die Möglichkeit der Erzeugung von Nadelserien mit teilweise unterschiedlichem Charakter, bspw. unterschiedlichen Zungen oder Zungenpositionen, unter Verwendung einheitlicher Nadelgrundkörper.

Weitere Abwandlungen sind möglich. Beispielsweise kann im Bereich der Zungenlagerung zwischen den Seitenwänden und dem Zungenschaft ein Spalt vorhanden sein, in dem ein Abstandshalter angeordnet ist. Der Abstandshalter kann eine dünne Scheibe oder auch eine sich an den Lagerkopf anschließende Ringwulst sein. Zum Beispiel kann der Nadelgrundkörper zur Ausbildung eines solchen gestuften Zungenschlitzes einen vom Nadelrücken her eingebrachten breiteren Schlitz aufweisen, durch den Schmutz (Fasern, Abrieb, Avivage, Öl, usw.) zu dem Nadelrücken hin austreten kann ohne die Beweglichkeit der Zunge zu beeinträchtigen. Die Breite dieses zusätzlichen Schlitzes kann von der Nadelbrust zu dem Nadelrücken hin kontinuierlich oder diskontinuierlich zunehmen.

Die erfindungsgemäße Zungenlagerung zeichnet sich durch einen erhöhten Traganteil in der Lagerung aus. Er lässt sich gegenüber herkömmlicher Zungenlagerung mehr als verdoppeln. Entsprechend besser ist die seitliche Führung der Zunge. Die seitliche Zungenauslenkung auf dem Haken ist kleiner als bei handelsüblichen sonstigen Nadeln. Auch lässt sich das radiale und axiale Zungenspiel vermindern.

Die nachfolgenden Zeichnungen und die Beschreibung offenbaren weitere Details vorteilhafter Ausführungsformen der Erfindung. Es zeigen:
Figur 1 eine erfindungsgemäße Nadel, in schematisierter Seitenansicht,
Figur 2 die Nadel nach Figur 1 vor dem Stauchen ihres Achsstifts,
Figur 3 die Nadel nach Figur 1, in Querschnittsdarstellung nach dem Stauchen des Achsstifts,
Figur 4 eine abgewandelte Ausführungsform der Nadel nach Figur 1 in einer Querschnittsdarstellung entsprechend Figur 3,
Figur 5 die Nadel nach Figur 4, in einer ausschnittsweisen Perspektivdarstellung,
Figur 6 eine abgewandelte Ausführungsform der erfindungsgemäßen Nadel in einer teilweise aufgeschnittenen Seitenansicht ohne Zunge,
Figur 7 nach Figur 6 bei der Herstellung vor dem Stauchen ihres Lagestifts,
Figur 8 die Nadel nach Figur 6 mit Lagerstift und Zunge, in Querschnittsdarstellung,
Figur 9 eine abgewandelte Ausführungsform einer Nadel mit exzentrischer Zungenlagerung vor dem Stauchen des Lagerstifts, in seitlicher Perspektivansicht,
Figur 10 die Nadel nach Figur 9 nach dem Stauchen des Stifts,
Figur 11 die Nadel nach Figur 9 nach dem Stauchen des Stifts in einer teilweise aufgeschnittenen Seitenansicht mit Zunge,
Figur
   12-14 verschiedene Zungenlochformen, an ausschnittsweise dargestellten Zungenschäften, jeweils in Perspektivdarstellung und
Figur
   15 und 16 eine abgewandelte Ausführungsform einer Nadel mit abgedeckter Zungenlagerung in Querschnittsdarstellung.

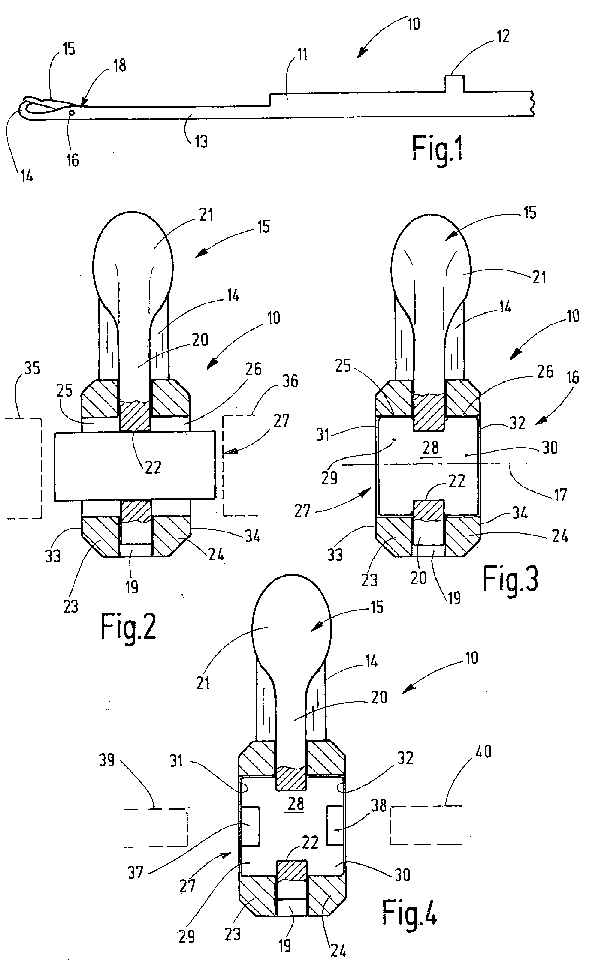

In Figur 1 ist eine Zungennadel 10 veranschaulicht, die einen Nadelgrundkörper 11 mit einem zum Antrieb der Zugennadel 10 dienenden Fuß 12 aufweist. Von dem Nadelgrundkörper 11 erstreckt sich ein Schaft 13 weg, der an seinem freien Ende einen Haken 14 trägt. Dem Haken 14 ist eine Zunge 15 zugeordnet, die durch eine Zungenlagerung 16 auf den Haken 14 zu und von diesem weg schwenkbar ist, um den Haken 14 zu öffnen oder zu schließen. Die Zungennadel kann insoweit nahezu beliebige Abwandlungen erfahren. Sie kann einen geraden oder auch mäanderförmig ausgebildeten Schaft 13 aufweisen. Der Nadelgrundkörper 11 kann als geschlossener Körper ausgebildet oder mit Aussparungen versehen sein. Es können ein oder mehrere Füße 12 vorgesehen sein. Anstelle des Fußes 12 kann auch eine Kupplungseinrichtung zum Anschluss einer antreibenden anderen Nadel, einem sogenannten Kupplungsteil, vorgesehen sein. Außerdem können ein oder mehrere Auswahlteile an dem Nadelgrundkörper 11 vorgesehen sein, die an diesem z.B. beweglich gelagert sein können.

Die nachfolgende Beschreibung betrifft die Zungenlagerung 16, die von der Erfindung in besonderer Weise weitergebildet wird. Die Zungenlagerung 16 ist z.B. aus Figur 3 zu erkennen. Die an ihrem Ende einen Löffel tragende Zunge 15 ist durch die Zungenlagerung 16 um eine Achse 17 schwenkbar gelagert, die quer zur Nadellängsrichtung steht. Die Zungenlagerung 16 ist im Bereich der Nadelbrust 18 angeordnet, in der ein Schlitz 19 zur Aufnahme der Zunge angeordnet ist. Die Zunge 15 weist eine sich in den Schlitz 19 erstreckenden Zungenschaft 20 auf, der an den dem der Zungenlagerung 16 fern liegenden Ende einen Löffel 21 (oder ein sonstiges Schließorgan) und an seinem in den Schlitz 19 liegenden Ende ein Zungenloch 22 aufweist. Das Zungenloch 22 kann bspw. als zylindrische, alternativ auch als konische Durchgangsöffnung ausgebildet sein. Vorzugsweise ist es kreisrund. Es kann jedoch auch abweichende Formen, z.B. mehreckige oder elliptische Querschnitte aufweisen.

Der Schlitz 19 wird von zwei Seitenwänden 23, 24 begrenzt, die Lageröffnungen 25, 26 aufweisen. Die Lageröffnungen 25, 26 sind konzentrisch zu der Achse 17 angeordnet und fluchten miteinander. Es handelt sich um Öffnungen mit in Öffnungslängsrichtung konstantem Querschnitt. Beispielweise sind die Lageröffnungen 25, 26 zylindrisch, wobei sie an ihrem inneren oder äußeren Rand auch mit einer Fase oder einer Einführschräge versehen sein können. Zur Lagerung der Zunge 15 dient ein Stift 27, der bezüglich des Zungenschafts 20 symmetrisch ausgebildet ist. Ein mittlerer Abschnitt 28 füllt das Zungenloch 22 aus. An dem mittleren Abschnitt 28 schließen sich Lagerköper 29, 30 an, die zueinander spiegelsymmetrisch ausgebildet sind. Die Lagerköpfe 29, 30 sind vorzugsweise zylindrisch ausgebildet, wobei sie an ihren Rändern etwas gerundet sein können. Sie sitzen mit geringem Spiel in den Lageröffnungen 25, 26. Die Stirnflächen 31, 32 der Lagerköpfe 29, 30 liegen bündig zu den Seitenflächen 33, 34 der Seitenwände 23, 24 oder stehen etwas in den Lageröffnungen 25, 26.

Vorzugsweise sind die Lagerköpfe 29, 30 gleichzeitig in einem Stauchvorgang ausgebildet worden. Dazu wird zunächst der Nadelgrundkörper 11 gemäß Figur 2 bereitgestellt und die Zunge 15 in dem Schlitz 19 positioniert. Nachfolgend wird der zunächst noch zylindrische Stift 27, bspw. in Gestalt eines Drahtabschnitts in das Zungenloch 22 eingesetzt. Der Stift 27 wird dabei vorzugsweise mittig positioniert, so dass seine beiden Enden gleich weit über die Seitenflächen 33, 34 aus den Lageröffnungen 25, 26 herausragen. Nachfolgend wird der Stift 27 zwischen zwei in Figur 2 lediglich gestrichelt schematisch angedeuteten zueinander vorzugsweise symmetrisch ausgebildeten Stempeln 35, 36 axial gestaucht. Es entstehen dadurch die Lagerköpfe 29, 30 gemäß Figur 3. Außerdem kann der mittlere Abschnitt 28 etwas gestaucht werden, so dass sein Durchmesser etwas zunimmt und eine kraftschlüssige Verbindung zwischen der Zunge 15 und dem Stift 27 entsteht.

Im Betrieb der Zungenadel 10 kann die Zunge 15 frei zwischen dem Haken 14 und einer Rücklage schwenken, in der der Löffel 21 weit von dem Haken 14 entfernt ist. Schwenkt die Zunge 15, dreht wegen der drehfesten Kopplung zwischen der Zunge 15 und dem Stift 27 letzterer in den Lageröffnungen 25, 26. Die Außenflächen 31, 32 (Mantelflächen) der Lagerköpfe 29, 30 erbringen dabei die radiale Führung der Zunge 15. Die Zunge 15 kann an den Innenflächen der Seitenwände 23, 24 geführt sein, um den Haken 14 präzise zu treffen, d.h. die Zungenauslenkung bleibt auch bei fortschreitendem Verschleiß gering. Die Lagereinrichtung 26 kann zur Führung der Zunge, d.h. zur Verminderung des seitlichen Schwenkspiels derselben beitragen.

Bei einer abgewandelten Ausführungsform der Nadel 10, wie sie in Figur 4 veranschaulicht ist, sind in den Stirnflächen 31, 32 des Stifts 27 weitere Vertiefungen 37, 38 eingeprägt, die z.B. rund, mehreckig, konisch, sphärisch oder auch kegelig ausgebildet sein können. Vorzugsweise dienen dazu Stempel 39, 40 entsprechender Form, wie sie in Figur 4 gestrichelt angedeutet sind. Vorzugsweise werden die beiden Vertiefungen 37, 38 gleichzeitig eingebracht. Durch das Stauchen des Stifts 27 mit den Stempeln 35, 36 und/oder den vorzugsweise symmetrisch ausgebildeten Stempeln 39, 40 jeweils gleichzeitig, wird die übrige Nadel 10 von Verformungskräften weitgehend freigehalten und es kommt zur symmetrischen Ausbildung der Lagerköpfe 29, 30 des Stifts 27. Durch das Einformen z.B. zylindrischer Vertiefungen 37, 38 oder sonstiger Vertiefungen mit vorzugsweise in Längsrichtung konstantem Querschnitt kann die Ausbildung der Form der Lagerkörper 29, 30 verbessert werden. Außerdem kann die Aufweitung des mittleren Abschnitts 28 verstärkt werden, so dass die drehfeste Verbindung zwischen dem Stift 27 und der Zunge 15 unterstützt wird. Durch die Formgebung des Bodens der Vertiefungen 37, 38 kann die Richtung der Materialverdrängung gesteuert erden. Während ein kegelförmig vertiefter Boden eine seitliche Materialverdrängung fördert ist ein ebener Boden, wie er in Figur 4 veranschaulicht ist, dazu angetan, den mittleren Abschnitt 28 im Durchmesser zu vergrößern.

Anstelle der Stempel 35, 36; 39, 40 können auch gestufte Stempel vorgesehen werden, so dass die Umformung des Stifts 27 nicht zweischrittig sondern einschrittig erfolgt.

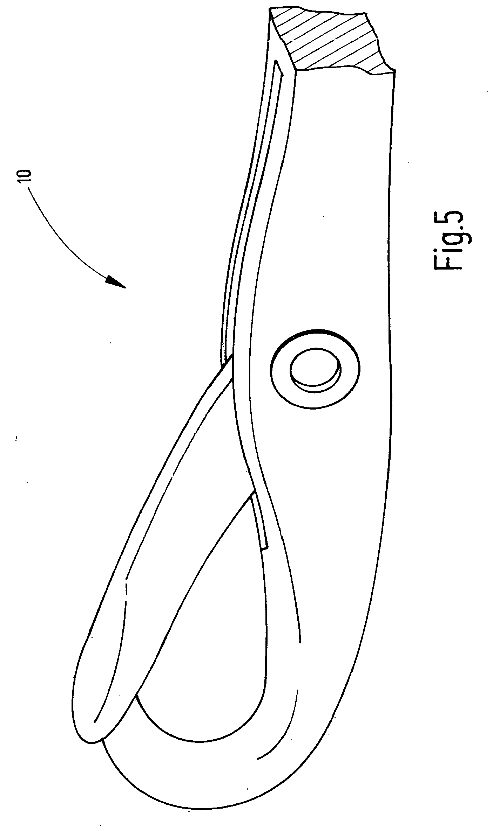

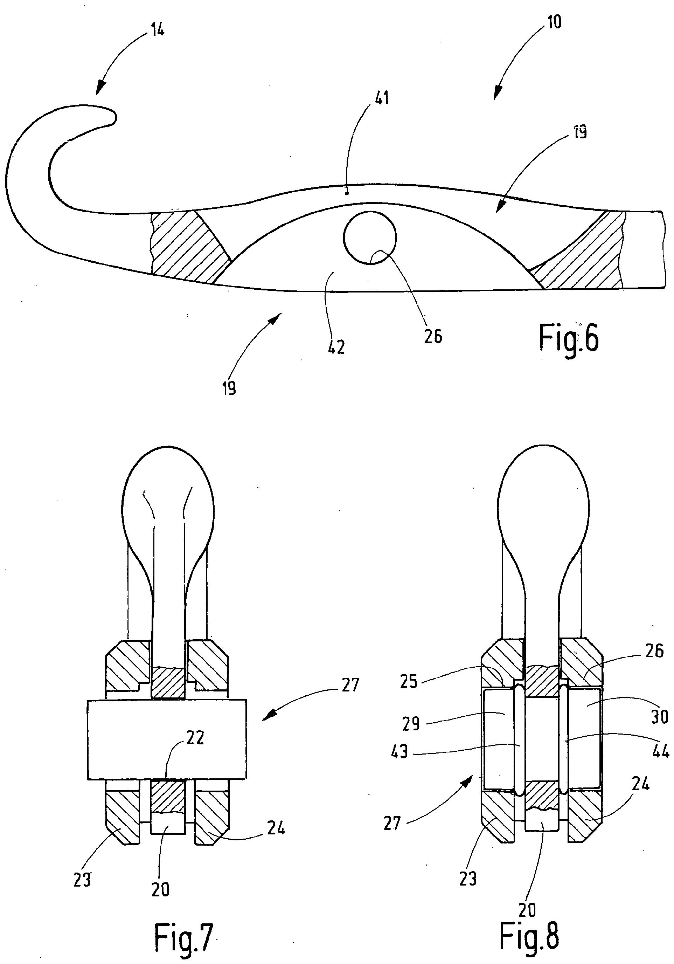

Die in Figur 5 nochmals veranschaulichte Nadel 10 arbeitet wie bereits vorstehend im Zusammenhang mit Figur 1 bis 4 beschrieben. Die bislang beschriebene Nadel 10 weist Seitenwände 23, 24 auf, die zwischen einander einen Schlitz 19 mit konstanter Breite begrenzen. Es ist aber möglich, den Schlitz 19 mit variabler Breite auszustatten. Dazu ist in Figur 6 ausschnittsweise eine Nadel 10 veranschaulicht, deren Schlitz 19 in seinem brustnahen Bereich einen Abschnitt 41 mit enger Weite und an dem Nadelrücken einen Abschnitt 42 mit größerer Weite aufweist. Die Lageröffnungen 25, 26 sind vorzugsweise in dem Abschnitt 42 mit größerer Weite angeordnet. Dies ist jedoch nicht zwingend. In Figur 6 ist lediglich die Lageröffnung 26 sichtbar.

Zwischen dem Zungenschaft 20 und der Seitenwand 23 bzw. 24 können Abstandhaltemittel vorgesehen sein. Solche Abstandshaltemittel können z.B. von sich radial über den Rand der Lageröffnungen 25, 26 hinaus erstreckende Strukturen gebildet sein, wie bspw. Ringwülste 43, 44, die an den Lagerköpfen 29, 30 ausgebildet sind. Die Ringwulste 43, 44 erstrecken sich dabei vorzugsweise radial über die zylindrischen Außenflächen der Lagerköpfe 29, 30 und bilden somit Ringflansche. Der Durchmesser der Ringwülste übersteigt den Durchmesser der Lageröffnungen 25, 26. Anstelle dieser Ringwülste 43, 44 können auch Abstandsscheiben aus Metall oder Kunststoff vorgesehen sein.

Zur Herstellung des gestuften Stifts 27 wird gemäß Figur 7 wiederum von einem zylindrischen Stift 27 ausgegangen. Dieser wird axial entsprechend Figur 3 sowie bedarfsweise Figur 4 gestaucht, so dass sich die Lagerköpfe 29, 30 und auch die Ringwulste 43, 44 bilden. Alternativ können anstelle der Ringwulste 43, 44, Distanzscheiben in den Spalt zwischen dem Zungenschaft 20 und den Seitenwänden 23, 24 eingefügt werden. Der Stift 27 wird in dem Zungenloch 22 (bei Anwendung der 1/3-Regel) mittig positioniert und entsprechend gestaucht, um die gewünschte Form nach Figur 8 zu erzeugen.

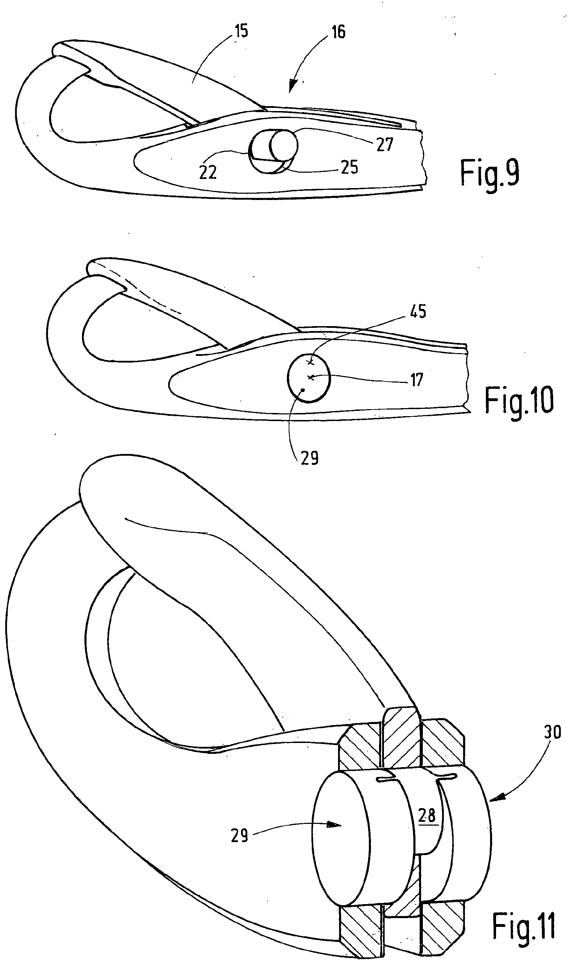

Bei den vorstehenden Ausführungsbeispielen ist davon ausgegangen worden, dass die Seitenflächen des Zungenschafts 20 glatt und parallel zueinander sind. Sie können jedoch auch Ausnehmungen, Aussparungen, Vertiefungen, Wölbungen, Stufen oder dergleichen aufweisen. Weiter ist vorstehend davon ausgegangen worden, dass nicht nur die Lageröffnungen 25, 26, sondern auch das Zungenloch 22 konzentrisch zu der Achse 17 positioniert sind, so dass der mittlere Abschnitt 28 und die Lagerköpfe 29, 30 ebenfalls konzentrisch sind. Bei allen vorgenannten Ausführungsformen kann jedoch auch eine exzentrische Anordnung gewählt werden. Figur 9 bis 11 veranschaulicht dies. Soll z.B. eine exzentrische Zungenlagerung 16 erzeugt werden, kann die Zunge 15, wie es Figur 9 zeigt, so positioniert werden, dass das Zungenloch 22 zwar innerhalb der Lageröffnungen 25, 26 jedoch exzentrisch zu diesen steht. Beim nachfolgenden Stauchen des Stifts 27 können die sich bildenden Lagerköpfe 29, 30 exzentrisch zu dem verbleibenden mittleren Abschnitt 28 entstehen. Somit ist die Mittelachse 45 des mittleren Abschnitts 28, wie Figur 10 zeigt, gegen die Achse 17 exzentrisch versetzt. Dies ist besonders aus Figur 11 ersichtlich.

Vorstehend wurde ein vorzugsweise zylindrisches Zungenloch 22 vorausgesetzt. Bei allen vorgenannten Ausführungsformen kann die Form des Zungenlochs 22 jedoch auch abweichend gewählt sein. Zum Beispiel veranschaulicht Figur 12 ein Zungenloch 22, das in einem Bereich seines Randes von der sonst eingehaltenen Kreisform abweicht. Es ist somit ein zusätzliches Formmerkmal 46 vorhanden, in das beim Stauchen des Stifts 27 Material des mittleren Abschnitts 28 einfließen kann, so dass eine formschlüssige drehfeste Kopplung zwischen dem Stift 27 und dem Zungenschaft 20 gegeben ist.

Entsprechende Formmerkmale können auch z.B. gemäß Figur 13 durch eine randseitige Kerbe 47 gebildet sein, die einerseits die Wandung des Zungenlochs 22 schneidet und andererseits sich in die Flachseite des Zungenschafts 20 erstreckt. Derartige Kerben 47 können, wie Figur 14 zeigt, an einer oder mehreren Stellen sowie an einem oder mehreren Rändern des Zungenlochs 22 vorgesehen sein.

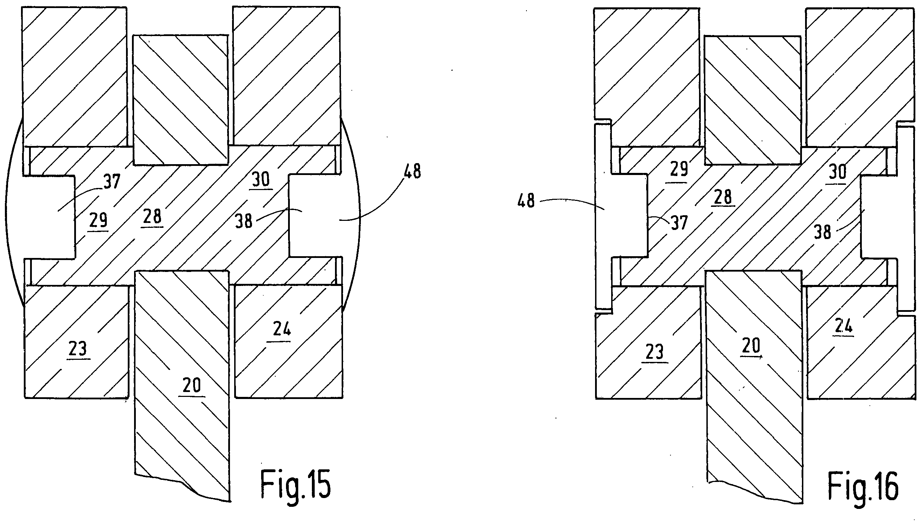

Fig. 15 und 16 zeigen Möglichkeiten zur Abdeckung der erfindungsgemäßen Zungenlagerung 16. Insbesondere bei der Verarbeitung von Fasergarn mit einem hohen Kurzfaseranteil kann eine Abdeckung 48 der Zungenlagerung 16 vermeiden, dass Fasern und anderer Schmutz in die Zwischenräume der Zungenlagerung 16 gelangen. Die Abdeckungen 48 können in den Vertiefungen 37, 38 der Lagerköpfe 29, 30 bspw. kraftschlüssig gehalten, d.h. eingedrückt oder auch eingeklipst sein. Fig. 15 zeigt eine einfache Ausführung mit einer Abdeckung, die über die Breite des Nadelschafts hinausgeht. Davon abweichend zeigt Fig. 16 eine fadenfreundlichere Ausführung, bei der die Abdeckung versenkt angeordnet ist. Dazu ist in der Backenwand eine zusätzliche Senkung vorgesehen, um die Abdeckung aufzunehmen.

Eine erfindungsgemäße Zungennadel weist einen drehfest mit der Zunge verbundenen Achsstift auf, der zu beiden Seiten des Zungenschafts 20 Lagerköpfe 29, 30 von zueinander spiegelsymmetrischer Gestalt aufweist. Die Lagerköpfe 29, 30 sind durch plastische Verformung (d.h. axiales Stauchen eines Stifts 27) erzeugt und weisen eine zylindrische Außenform auf.

### Bezugszeichenliste:

- 10: Zungennadel
- 11: Fuß
- 12: Nadelgrundkörper
- 13: Schaft
- 14: Haken
- 15: Zunge
- 16: Zungenlagerung
- 17: Achse
- 18: Nadelbrust
- 19: Schlitz
- 20: Zungenschaft
- 21: Löffel
- 22: Zungenloch
- 23, 24: Seitenwände
- 25, 26: Lageröffnung
- 27: Stift
- 28: mittlerer Abschnitt
- 29, 30: Lagerköpfe
- 31, 32: Stirnflächen (Mantelflächen) der Lagerköpfe 29, 30
- 33, 34: Seitenflächen der Seitenwände 23, 24
- 35, 36: Stempel
- 37, 38: Vertiefung
- 39, 40: Stempel
- 41: Abschnitt des Schlitzes 19 mit geringerer Weite
- 42: Abschnitt des Schlitzes 19 mit größerer Weite
- 43, 44: Ringwülste
- 45: Mittelachse des Abschnitts 28
- 46: Formmerkmal
- 47: Kerbe
- 48: Abdeckung

## Patentansprüche

1. Verfahren zur Herstellung einer Zungenlagerung (16) einer Zungennadel (10), mit folgenden Schritten:
Bereitstellen eines Nadelgrundkörpers (11) mit einem Schaft (13), in dem ein von zwei Seitenwänden (23, 24) begrenzter Schlitz (19) ausgebildet ist,
Ausbilden zweier miteinander fluchtender durchgehender Lageröffnungen (25, 26) mit übereinstimmendem zylindrischen Querschnitt in den Schlitzwänden (23, 24) Bereitstellen einer Zunge (15) mit einem Zungenschaft (20), der ein durchgehendes Zungenloch (22) aufweist, dessen Querschnitt vom Querschnitt der Lageröffnungen (25, 26) abweicht,
Positionieren eines Endes der Zunge (15) in dem Schlitz (19), so dass das Zungenloch (22) im Bereich der Lageröffnungen (25, 26) steht,
Einführen eines Stifts (27) in das Zungenloch (22) und beidseitiges Stauchen des Stifts (27) zur Ausbildung zylindrischer Lagerköpfe (29, 30) innerhalb der Lageröffnungen (25, 26),
**dadurch gekennzeichnet,**
**dass** der Querschnitt des Zungenlochs (22) geringer ist als der Querschnitt der Lageröffnungen (25, 26), und
**dass** bei dem Stauchen der Durchmesser des Stifts (27) auch in dem Bereich des Zungenlochs (22) erhöht wird, um eine formschlüssige und/oder kraftschlüssige drehfeste Verbindung zwischen dem Stift (27) und der Zunge (15) auszubilden.

2. Verfahren nach Anspruch 1, **dadurch gekennzeichnet, dass** die Länge des zylindrischen Stifts (27) die Dicke des Nadelgrundkörpers (11) übersteigt, so dass er nach dem Einführen in das Zungenloch (22) beidseits aus den Lageröffnungen (25, 26) heraus steht.

3. Verfahren nach Anspruch 1, **dadurch gekennzeichnet, dass** das Stauchen des Stifts (27) mit zwei zueinander fluchtenden gestuften oder stirnseitig glatten ungestuften Stempeln (35, 36) ausgeführt wird, um in den Lageröffnungen (25, 26) miteinander übereinstimmende symmetrische Lagerköpfe (29, 30) auszubilden.

4. Verfahren nach Anspruch 1, **dadurch gekennzeichnet, dass** der Stauchvorgang in mehreren Schritten ausgeführt wird, in denen unterschiedliche Stempel (35, 39, 36, 40) als Stauchwerkzeuge genutzt werden.

5. Verfahren nach Anspruch 1, **dadurch gekennzeichnet, dass** der Stift (27) mit der Zunge (15) durch Formschluss oder Kraftschluss drehfest verbunden wird.

6. Zungennadel (10) mit einem Nadelgrundkörper (11) mit einem Schaft (13), in dem ein von zwei Seitenwänden (23, 24) begrenzter Schlitz (19) ausgebildet ist,
wobei in den Schlitzwänden (23,24) zwei miteinander fluchtende durchgehende Lageröffnungen (25, 26) mit übereinstimmendem zylindrischem Querschnitt ausgebildet sind,
mit einer Zunge (15), die einen Zungenschaft (20) mit einem durchgehenden Zungenloch (22) aufweist, dessen Querschnitt geringer ist als der Querschnitt der Lageröffnungen (25, 26),
mit einem Lagerstift (27), der sich durch das Zungenloch (22) erstreckt und innerhalb beider Lageröffnungen (25, 26) durch plastische Deformation erzeugte Lagerköpfe (29, 30) von übereinstimmender Form aufweist wobei
bei der plastischen Deformation durch Stauchen der Durchmesser des Stifts (27) auch in dem Bereich des Zungenlochs (22) erhöht ist, um eine formschlüssige und/oder kraftschlüssige drehfeste Verbindung zwischen dem Stift (27) und der Zunge (15) auszubilden.

7. Zungennadel nach Anspruch **dadurch gekennzeichnet, dass** in Zungenloch-Längsrichtung gemessene Dicke des Zungenschafts (20) größer oder geringer ist als die in gleicher Richtung gemessene Dicke einer Schlitzwand (23, 24).

8. Zungennadel nach Anspruch 6, **dadurch gekennzeichnet, dass** die Lagerköpfe (29, 30) an ihrer jeweiligen nach außen weisenden Seite eine prismatische oder zylindrische Vertiefung (37, 38) aufweisen.

9. Zungennadel nach Anspruch 6, **dadurch gekennzeichnet, dass** die Lagerköpfe (29, 30) zu dem sich durch das Zungenloch (22) erstreckenden Abschnitt (28) des Stifts (27) konzentrisch angeordnet sind.

10. Zungennadel nach Anspruch 6, **dadurch gekennzeichnet, dass** die Lagerköpfe (29, 30) zu dem sich durch das Zungenloch (22) erstreckenden Abschnitt (28) des Stifts (27) exzentrisch angeordnet sind.

11. Zungennadel nach Anspruch 6, **dadurch gekennzeichnet, dass** an dem Zungenloch (22) zwischen dem Zungenschaft (20) und den Schlitzwänden (23, 24) ein Abstand festgelegt ist, in dem ein Abstandshalter (43, 44) angeordnet ist.

12. Zungennadel nach Anspruch 11, **dadurch gekennzeichnet, dass** der Abstandshalter (43, 44) ein Radialvorsprung des Stifts (27) ist.

13. Zungennadel nach Anspruch 6, **dadurch gekennzeichnet, dass** das Zungenloch (22) zylindrisch ausgebildet ist.

14. Zungennadel nach Anspruch 6, **dadurch gekennzeichnet, dass** das Zungenloch (22) wenigstens ein von der Zylinderform abweichendes Formmerkmal (46) aufweist.

## Claims

1. Method for production of a latch bearing (16) of a latch needle (10), with the following steps:
- provision of a needle base body (11) with a shaft (13) in which a slot (19) is formed which is delimited by two side walls (23, 24),
- formation of two mutually aligned, continuous bearing openings (25, 26) with matching cylindrical cross-section in the slot walls (23, 24),
- provision of a latch (15) with a latch shank (20) having a continuous latch hole (22), the cross-section of which differs from the cross-section of the bearing openings (25, 26),
- positioning of one end of the latch (15) in the slot (19) so that the latch hole (22) stands in the region of the bearing openings (25, 26),
- insertion of a pin (27) in the latch hole (22) and crushing of the pin (27) on both sides to form cylindrical bearing heads (29, 30) inside the bearing openings (25, 26),
**characterised in that**
the cross-section of the latch hole (22) is smaller than the cross-section of the bearing openings (25, 26), and
on crushing, the diameter of the pin (27) is increased even in the region of the latch hole (22) in order to create a form-fit and/or force-fit, rotationally fixed connection between the pin (27) and the latch (15).

2. Method according to claim 1, **characterised in that** the length of the cylindrical pin (27) exceeds the thickness of the needle base body (11) so that, after insertion in the latch hole (22), it protrudes from the bearing openings (25, 26) on both sides.

3. Method according to claim 1, **characterised in that** the pin (27) is crushed using two mutually aligned stepped dies (35, 36), or unstepped dies (35, 36) which are smoothed on the end face, in order to form mutually matching, symmetrical bearing heads (29, 30) in the bearing openings (25, 26).

4. Method according to claim 1, **characterised in that** the crushing process is performed in several stages in which different dies (35, 39, 36, 40) are used as crushing tools.

5. Method according to claim 1, **characterised in that** the pin (27) is connected rotationally fixedly to the latch (15) by form fit or by force fit.

6. Latch needle (10),
- with a needle base body (11) with a shaft (13) in which a slot (19) is formed which is delimited by two side walls (23, 24),
- wherein two mutually aligned, continuous bearing openings (25, 26) with matching cylindrical cross-section are formed in the slot walls (23, 24),
- with a latch (15) having a latch shank (20) with a continuous latch hole (22), the cross-section of which is smaller than the cross-section of the bearing openings (25, 26),
- with a bearing pin (27) which extends through the latch hole (22) and has bearing heads (29, 30) of matching form which are produced by plastic deformation inside the bearing openings (25, 26),
- wherein on plastic deformation by crushing, the diameter of the pin (27) is increased even in the region of the latch hole (22) in order to create a form-fit and/or force-fit, rotationally fixed connection between the pin (27) and the latch (15).

7. Latch needle according to claim 6, **characterised in that** the thickness of the latch shank (20) measured in the longitudinal direction of the latch hole is greater than or smaller than the thickness of a slot wall (23, 24) measured in the same direction.

8. Latch needle according to claim 6, **characterised in that** the bearing heads (29, 30) have a prismatic or cylindrical depression (37, 38) at their respective outward-facing end.

9. Latch needle according to claim 6, **characterised in that** the bearing heads (29, 30) are arranged concentrically to the portion (28) of the pin (27) extending through the latch hole (22).

10. Latch needle according to claim 6, **characterised in that** the bearing heads (29, 30) are arranged eccentrically to the portion (28) of the pin (27) extending through the latch hole (22).

11. Latch needle according to claim 6, **characterised in that** at the latch hole (22), a spacing is established between the latch shank (20) and the slot walls (23, 24), in which a spacer (43, 44) is arranged.

12. Latch needle according to claim 11, **characterised in that** the spacer (43, 44) is a radial protrusion of the pin (27).

13. Latch needle according to claim 6, **characterised in that** the latch hole (22) is formed cylindrically.

14. Latch needle according to claim 6, **characterised in that** the latch hole (22) has at least one form feature (46) deviating from the cylindrical form.

## Revendications

1. Procédé de fabrication d'un palier de clapet (16) d'une aiguille à clapet (10), comportant les étapes suivantes :
mise à disposition d'un corps de base d'aiguille (11) doté d'une tige (13) dans laquelle est réalisée une fente (19) délimitée par deux parois latérales (23, 24),
réalisation de deux ouvertures de palier (25, 26) traversantes, alignées l'une avec l'autre et présentant des sections transversales cylindriques identiques, dans les parois de fente (23, 24),
mise à disposition d'un clapet (15) doté d'une tige de clapet (20) qui présente un trou de clapet (22) traversant dont la section transversale est différente de la section transversale des ouvertures de palier (25, 26),
positionnement d'une extrémité du clapet (15) dans la fente (19), de sorte que le trou de clapet (22) se situe dans la région des ouvertures de palier (25, 26),
insertion d'un axe (27) dans le trou de clapet (22) et refoulement de l'axe (27) sur les deux côtés, en vue de la formation de tourillons (29, 30) cylindriques à l'intérieur des ouvertures de palier (25, 26), **caractérisé en ce que**
la section transversale du trou de clapet (22) est inférieure à la section transversale des ouvertures de palier (25, 26), et
que lors du refoulement, le diamètre de l'axe (27) est augmenté également dans la région du trou de clapet (22), afin d'établir une liaison par forme et/ou par adhérence, solidaire en rotation, entre l'axe (27) et le clapet (15).

2. Procédé selon la revendication 1, **caractérisé en ce que** la longueur de l'axe (27) cylindrique est supérieure à l'épaisseur du corps de base d'aiguille (11), de sorte qu'après son insertion dans le trou de clapet (22), l'axe dépasse des ouvertures de palier (25, 26) sur les deux côtés.

3. Procédé selon la revendication 1, **caractérisé en ce que** le refoulement de l'axe (27) est réalisé avec deux poinçons (35, 36) qui sont alignés l'un avec l'autre et qui sont étagés ou bien lisses sur leurs faces frontales, sans être étagés, en vue de former dans les ouvertures de palier (25, 26) des tourillons (29, 30) symétriques identiques entre eux.

4. Procédé selon la revendication 1, **caractérisé en ce que** l'opération de refoulement est réalisée en plusieurs étapes, au cours desquelles on utilise des poinçons (35, 39, 36, 40) différents en tant qu'outils de refoulement.

5. Procédé selon la revendication 1, **caractérisé en ce que** l'axe (27) est relié au clapet (15) de façon solidaire en rotation, par forme ou par adhérence.

6. Aiguille à clapet (10)
comprenant un corps de base d'aiguille (11) doté d'une tige (13) dans laquelle est réalisée une fente (19) délimitée par deux parois latérales (23, 24),
sachant que deux ouvertures de palier (25, 26) traversantes, alignées l'une avec l'autre et présentant des sections transversales cylindriques identiques, sont réalisées dans les parois de fente (23, 24),
comprenant un clapet (15) qui présente une tige de clapet (20) avec un trou de clapet (22) traversant dont la section transversale est inférieure à la section transversale des ouvertures de palier (25, 26),
comprenant un axe de palier (27) qui passe dans le trou de clapet (22) et présente, dans les deux ouvertures de palier (25, 26), des tourillons (29, 30) de forme identique, réalisés par déformation plastique, sachant que
lors de la déformation plastique par refoulement, le diamètre de l'axe (27) est augmenté également dans la région du trou de clapet (22), afin d'établir une liaison par forme et/ou par adhérence, solidaire en rotation, entre l'axe (27) et le clapet (15).

7. Aiguille à clapet selon la revendication 6, **caractérisée en ce que** l'épaisseur de la tige de clapet (20), mesurée dans le sens longitudinal du trou de clapet, est supérieure ou inférieure à l'épaisseur d'une paroi de fente (23, 24) mesurée dans le même sens.

8. Aiguille à clapet selon la revendication 6, **caractérisée en ce que** les tourillons (29, 30) présentent, sur leur face respective tournée vers l'extérieur, un creux (37, 38) prismatique ou cylindrique.

9. Aiguille à clapet selon la revendication 6, **caractérisée en ce que** les tourillons (29, 30) sont disposés de façon concentrique par rapport à la partie (28) de l'axe (27) qui passe dans le trou de clapet (22).

10. Aiguille à clapet selon la revendication 6, **caractérisée en ce que** les tourillons (29, 30) sont disposés de façon excentrique par rapport à la partie (28) de l'axe (27) qui passe dans le trou de clapet (22).

11. Aiguille à clapet selon la revendication 6, **caractérisée en ce que** sur le trou de clapet (22), un espacement est défini entre la tige de clapet (20) et les parois de fente (23, 24), dans lequel est disposé un élément d'espacement (43, 44).

12. Aiguille à clapet selon la revendication 11, **caractérisée en ce que** l'élément d'espacement (43, 44) est une saillie radiale de l'axe (27).

13. Aiguille à clapet selon la revendication 6, **caractérisée en ce que** le trou de clapet (22) est réalisé de façon cylindrique.

14. Aiguille à clapet selon la revendication 6, **caractérisée en ce que** le trou de clapet (22) présente au moins une caractéristique de forme (46) s'écartant de la forme cylindrique.
